# EUROPEAN PATENT SPECIFICATION

(11) **EP 1 829 317 B1**
(45) Date of publication and mention of the grant of the patent: **19.03.2008**
(21) Application number: 04809168.0
(22) Date of filing: 22.12.2004
(51) Int. Cl.: H04L 29/06, H04L 29/08

(54) **METHODS AND ARRANGEMENTS FOR CACHING STATIC INFORMATION FOR PACKET DATA APPLICATIONS IN WIRELESS COMMUNICATION SYSTEMS**
VERFAHREN UND ANORDNUNGEN ZUM CACHE-SPEICHERN VON STATISCHEN INFORMATIONEN FÜR PAKETDATENANWENDUNGEN IN DRAHTLOSEN KOMMUNKATIONSSYSTEMEN
PROCEDES ET DISPOSITIFS DE MISE EN ANTEMEMOIRE D'INFORMATIONS STATIQUES POUR DES APPLICATIONS A PAQUETS DE DONNEES DANS DES SYSTEMES DE COMMUNICATION SANS FIL

(43) Date of publication of application: 05.09.2007
(73) Proprietor: TELEFONAKTIEBOLAGET LM ERICSSON (publ), 164 83 Stockholm (SE)
(72) Inventor: SKOG, Robert, S-165 76 Hässelby (SE)
(74) Representative: Norin, Klas
(86) International application number: PCT/SE2004/001995
(87) International publication number: WO 2006/068558

(56) References cited:
- EP-A2- 0 991 242
- US-A1- 2002 123 332
- US-A1- 2003 050 964
- US-A1- 2004 255 017

## Description

### FIELD OF THE INVENTION

The present invention relates to methods and arrangements in wireless communication systems offering packet data service. In particular the invention relates to caching of static information relating to a communication application executed in an user equipment.

### BACKGROUND

Modern wireless communication systems providing packet switched services, such as Universal Mobile Telecommunication System (UMTS) should be capable of supporting a large and diverse variety of applications having different demands on the capability of the user equipment, needed transmission capacity and quality of service, for example. The user equipment range from rather simple mobile phones with limited graphical presentation and processing capabilities to laptop computers, connected to the Internet via the wireless communication system, with very high graphical presentation capabilities and capabilities which facilitates high demand communication applications such as video conferencing and streamed media.

A communication application executed in the wireless user equipment is for example a browser application or an application for downloading streaming media. Through the wireless communication system the communication application in the user equipment gets access to a service provided in an application server on the Internet, for example. In order for the service to be adapted to the user equipment and its communication application information is transferred from the user equipment to the application server regarding the capabilities of the user equipment, the capabilities and preferred formats of the communication application and also choices made by the user, typically made in the communication application. An example could be the user accessing a WEB-page of a newspaper, wherein the information of that WEB-page is adapted to the user equipment capabilities and the user preferences, regarding for example the format of text and pictures, resolution, language etc. Information that has been transferred from the user equipment to the application server. This type of information is typically transferred in different headers, and the amount can be rather substantial.

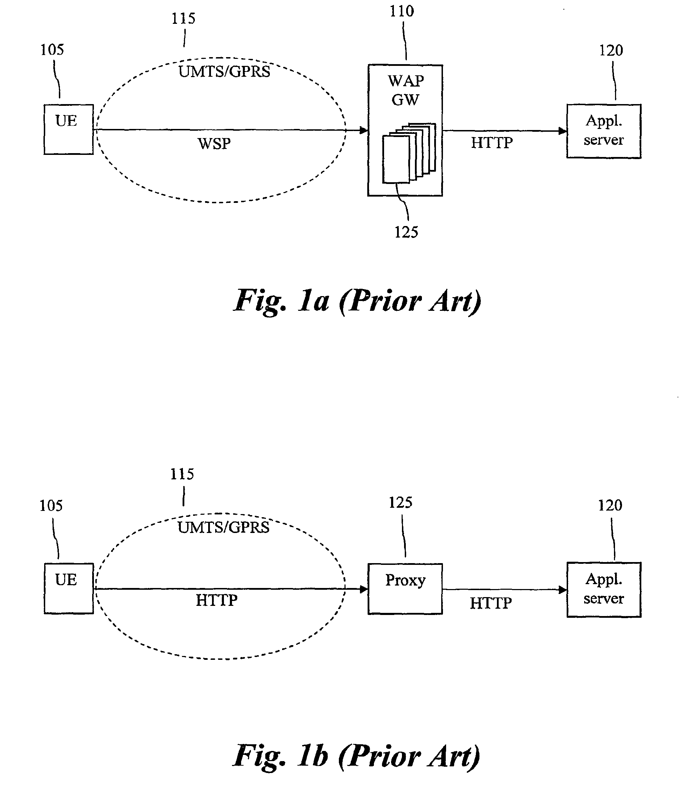

The Wireless Application Protocol, WAP, was originally introduced to provided an application protocol that, among other features, minimized the amount of supplementary data, such as headers, in the wireless transmissions. A WAP access to an application server according to the specification WAP 1.2.x is schematically illustrated in Fig. 1a (prior art). The WAP application running in the user equipment 105, issues a WSP-start to an WAP Gateway 110 over the radio interface 115. In the WAP-start are information on static headers which are cached by the WAP gateway 110. Upon a WSP-get from the WAP application (user equipment 105) the WAP gateway 110 uses the cached static headers in forming a HTTP-request to a service application on the application server 120. In this manner static information, such as the WAP headers, did not need to be transferred via the radio interface. The headers were added only for the transmission between the WAP gateway and the application server, which typically has a high capacity.

In later versions of the WAP, such as the recently introduced WAP 2.0, HTTP (Hypertext Transfer Protocol) is used all the way from the communication application of the user equipment to the application server, and the WAP gateway is replaced by a Proxy 125, as seen in Fig. 1b. Although advantageous in many aspects, the omission of the WAP gateway has a drawback in that the amount of redundant static information transmitted on the radio interface will increase. Typically HTTP-requests with a substantial amount of static information in headers are frequently issued by a browser application in the user equipment 105 and transferred all the way from the user equipment 105 to the application server 120, including transmission over the radio interface.

Also in other applications, for example streaming media applications, in the strive to let the wireless systems approach the wire-bound in appearance and capabilities, an increase in transmission of redundant information can be seen. A further example is Web services using XML-documents to convey Web service messages. In two or more consecutive messages from a client to a server a substantial part of the messages are the same.

Although the capacity of the packet data services offered by modern wireless communication systems, for example UMTS, shows a tremendous increase in comparison to previous generations of wireless systems, the radio resources are limited, and it is a general concern not to waste resources on redundant information. In addition the processing capabilities in the user equipment may be limited, and, if battery operated, the battery life is a factor. Hence, any reduction of redundantly sent information would be of high interest for a network operator as the capacity demands on the wireless network would be lower and for the user as the processing load on the user equipment will be lower and the battery life longer.

Document US 2003/0050964 discloses a context manager proxy which is able to store static data internally.

### SUMMARY OF THE INVENTION

An object of the present invention is to provide methods and devices that reduces the amount of static information that is transferred over the radio interface in a wireless communication system.

The above stated object is achieved by means of a method according to claim 1, a method in a network node according to claim 21, and a network node according to claim 29.

The present invention provides a method and an arrangement for accessing a service application from a user equipment in a wireless communication system. The access from a communication application executed in the user equipment to the service application of an application server, is via a proxy. The access may take place on the establishment of a communication session, or during an ongoing session. The method comprises the steps of:
- *sending* from the communication application of the user equipment, a start message to the proxy requesting to utilize a service application of an application server. The start message comprises a location indicator;
- the proxy *accessing* a caching node by the use of the location indicator and from the caching node *retrieving* static information. The static information has been transferred and cached in the caching node prior to the communication session; and
- the proxy *forming* a request at based on the retrieved static information, and *sending* said request to the service application of the application server.

The service application will whereby be provided with static information relating to the communication application without the static information has to be transferred from the user equipment during each communication session.

According to a first aspect of the present invention the location indicator preferably comprises an address to the caching node, for example an URL. Alternatively the location indicator can be a flag that can be interpreted by the proxy.

According to a second aspect of the method of present invention the proxy uses mobile identifying means such as IMSI, MSISDN or the user equipment IP-address, to retrieve the correct static information from the caching node, identified with the location indicator. Alternatively the proxy in combination with said location indicator uses a unique identity of the static information to retrieve the static information from the caching node The unique identity should be transferred to the proxy in the start message.

According to a third aspect of the method of present invention the above steps are performed by a method executed in the proxy.

According to a fourth aspect of the method of present invention the method comprises further initial steps to be taken prior to the establishing of the communication session, of the user equipment *transferring* static information relating to at least one communication application to the caching node. Preferably, an IP Multimedia CN Subsystem (IMS) is utilised for caching the static information and the Session Initiation Protocol (SIP) for the transferring. Preferably the SIP-register or the SIP publish procedures are used for the caching of the static information.

According to a fifth aspect of the method of present invention the start message is a reduced HTTP request, the static information comprises HTTP headers and the request formed by the proxy in the is a full HTTP-request.

Thanks to the invention the service application will be provided with static information relating to the communication application of the user equipment without the static information has to be transferred from the user equipment during each communication session. Thus valuable radio resources are not wasted, and the battery life of the user equipment is prolonged.

One advantage afforded by the present invention is that a proxy forms a full HTTP request from the reduced HTTP request received from the user equipment and the static information retrieved from the caching node.

A further advantage afforded by the present invention is that the static information can include a large variety of information in a large variety of formats, for example HTTP accept headers, encryption keys, and XML documents.

Yet a further advantage is that established procedures within the SIP framework can be used for the caching of the static information, for example SIP-register and SIP-Publish.

Further advantages and features of embodiments of the present invention will become apparent when reading the following detailed description in conjunction with the drawings.

### BRIEF DESCRIPTION OF THE DRAWINGS

Fig. 1a-b is a schematic illustration of WAP access procedures according to prior art.
Fig. 2 is a schematic illustration of a generic wireless communication system, in which the methods and arrangements according to the present invention may advantageously be applied;
Fig. 3 is a signal/message sequence scheme illustrating the method according to the present invention;
Fig. 4 is a signal/message sequence scheme illustrating the initial steps of an embodiment of the method according to the present invention;
Fig. 5 is a signal/message sequence scheme illustrating the steps of an embodiment of the method according to the present invention;
Fig. 6 is a schematic illustration of a SIP register message adapted according to the present invention.
Fig. 7 is a schematic illustration of a proxy according to the present invention.

### DETAILED DESCRIPTION

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

The present invention is applicable to packet data communication in a wireless communication system. In particular the present invention relates, but is not limited, to scenarios wherein the end user is utilizing a communication application such as a WEB browser executed in a user equipment, for example an mobile terminal, to browse web-pages provided on an application server. The application server is typically not a part of the wireless communication system. HTTP is typically used for the communication, but other protocols are not exclude.

The term "static information" in this application meant to be interpret as any information describing the capabilities, choices and preferences of the user, user equipment 105 or the applications executed in the user equipment 105, information that typically does not need to be updated for each communication session. However, the static information is typically and preferably updated, but less frequently, for example on power on of the user equipment. Static information may include, but is not limited to, information on the capabilities and preferences of the communication application regarding file formats, graphical resolution, supported java versions, preferred language, applets etc. The static information relates to a specific user, user equipment or communication application, or possibly groups of communication applications.

Described on a high level the present invention provides a method and an arrangement in a network node so that the static information can be provided to a service application of an application server without having to be transferred from the user equipment during each communication session. The static information is transferred from the user equipment to the caching node and cached in the caching node prior to the communication session. In the establishment of, or during, a communication session between the user equipment and a service application, via a proxy, the user equipment sends a start message to the proxy requesting to utilize a service application. The start message comprises a location indicator. The proxy access the caching node by the use of the location indicator and retrieves the static information. The proxy when forms a request based on the static information, and sends it to the service application.

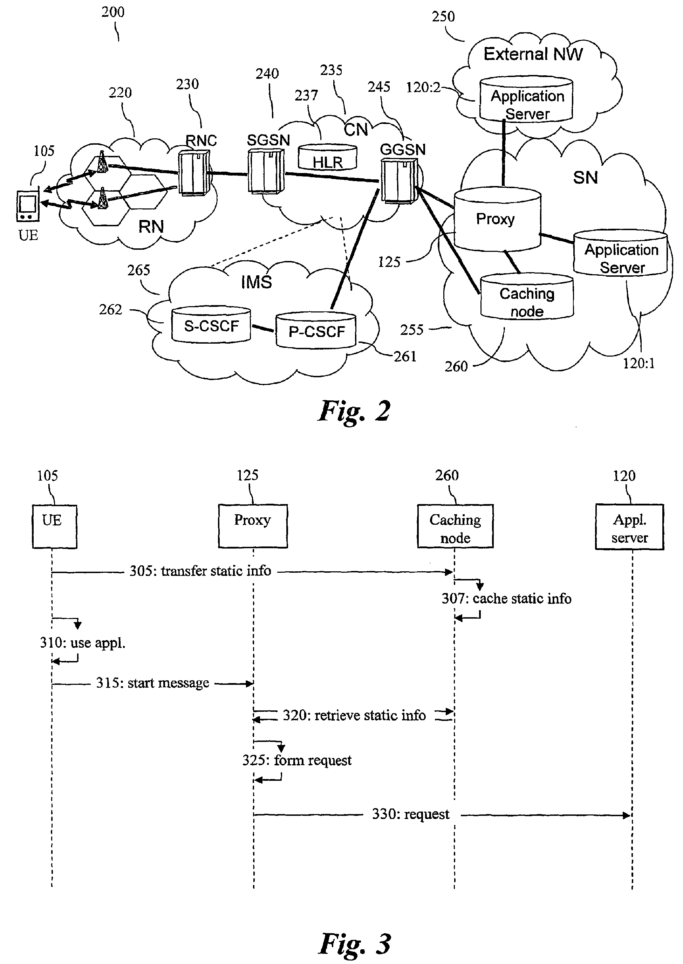

Fig. 2 is a schematic view of a wireless communication system in which the present invention may be used. The wireless communication system 200 comprises a user equipment 105, for example a mobile terminal, which may communicate with an application server 120.

The user equipment resides in the radio access network (RAN) 220, controlled by at least one Radio Network Controller (RNC) 230, which is in communication with a Serving GPRS support node (SGSN) 240 of the core network (CN) 235. The CN 235 comprises the Home Location Register (HLR) 237 or Home Subscriber Server (HSS) and is via Gateways nodes in communication with other networks. The Gateway GPRS support node (GGSN) 245 interconnects the CN 235 with the service network 255. The communication between the user equipment 105 and the service application 120 takes places via a proxy 125. The proxy may serve a plurality of application servers, 120:1 and 120:2, which may reside in the SN or in an external network 250. Alternatively, or in combination, a plurality of proxies, each serving different application services, are utilized. The proxy 125 is capable of accessing a caching node 260, which may be a part of the SN, as depicted, but also reside elsewhere in the system. The system may comprise a plurality of different caching nodes, relating to different type of services, proxies or applications servers 120, for example. The caching node 260, or the plurality of caching nodes, can be accessed from both the proxy 125 and the user equipment 105.

If the wireless communication system 200 supports IP-based multimedia services according to 3GPP rel-5, the CN is through the GGSN connected to an IP Multimedia CN Subsystem (IMS) 265. The IMS comprises, among other nodes (not shown) the Proxy Call Session Control Function (P-CSCF) 261, which is the first contact point of the user equipment in the IMS 265. A further node is the Serving CSCF (S-CSCF) 262 providing the session control services and may according to the present invention serve as a caching node 260.

As realized by the skilled in the art the communication may involve other nodes of the radio access network, the core network and the service network, which here has been omitted for clarity. Possible radio access networks includes, but is not limited to, UMTS, CDMA2000, Wireless LAN or GPRS network. The CN, IMS and SN are commonly realized as IP-based or ATM-based communication networks. In the following only nodes directly relevant to the methods and arrangements according to the present invention will be discussed. The mechanisms for transfer over, for example the air interface and within IP- and ATM-based networks, are known to the skilled person and not to be regarded as part of the invention.

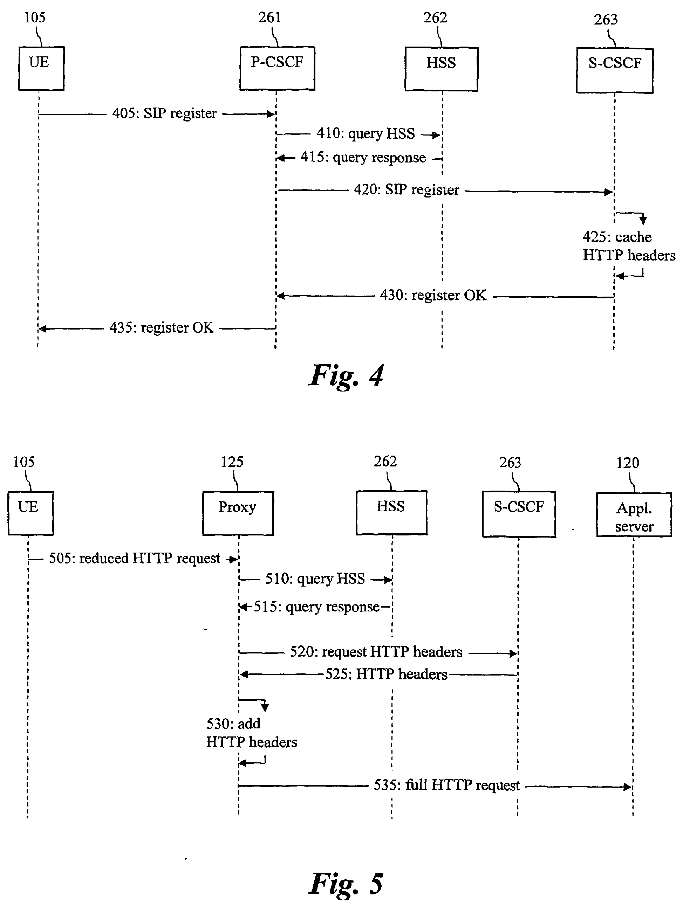

The method and arrangement according to the invention will be described in an UMTS network and with reference to the schematic signalling scheme depicted in Fig. 3 and the schematic illustration of a wireless communication system according to Fig. 2. Embodiments of the present invention are illustrated in Fig. 4 and Fig. 5.

The method according to the invention comprises the steps of:
305: The user equipment 105 access the caching node 260 and transfer a message with static information regarding one or more communication applications which are possible to execute in the user equipment 105. The also comprises means for identifying the static information, for example IMSI or MSISDN, or the user equipment IP-address. Alternatively a unique identity is included. The caching node 260 is preferably access with the used of suitable known addressing means, such as an URL.
307: The static information is cached by the caching node 260.

Steps 305-307 are initial steps which preferably are performed only at power on or if a need for updating the static information has been identified. The initial steps should preferably not be taken for every packet data communication session or during a session.
310: On establishing a communication session or during an ongoing communication session, the communication application of the user equipment 205 initiate a utilization of a service offered by an application server 120, which therefore should be accessed by the user equipment 105.
315: The communication application of the user equipment 105, issues a message to the proxy 125 for accessing the application server 120. The message comprise an indication on the location of the stored static information. The location indicator may be an address, for example an URL, a flag or a code which the proxy 125 can interpret and use to access the correct caching node 260.
320: The proxy 125 accesses the caching node 260 by the use of the location indicator and retrieves the static information relating to the communication application of the user equipment 205. Mobile identifying means such as IMSI or MSISDN, or address means such as the user equipment IP-address, may be used by the proxy for identifying the static information relevant for the specific user/user equipment. Alternatively, if a unique identity has been used in the initial steps, that unique identity is conveyed in the message from the user equipment and used in the accessing/retrieving from the caching node 260.
325: The proxy 125 uses the static information in forming an request to the service application of the application server 260.
330: The proxy 125 sends a request to the application server 120. The request now comprises the static information which the service application of the application server 120 may use to adapt further communication to the user equipment 105.

The steps 310-330 are typically repeated for every communication session, and may be repeated during a session. The service application is after completion of the above steps provided with the static information needed to adapt the content with regards to the communication application of the user equipment 105, with the static information having been transferred over the air interface only in the initial step 305.

The caching node 260 may comprise of a plurality of nodes. In this case the proxy places the requests at a first node, which in turn accesses further nodes to retrieve the static information. This will be further exemplified below. Hence, the term "caching node" should not be interpret to be limited to only one network element.

In a further embodiment of the present invention the caching node stores a plurality of static information relating to a plurality of communication applications of one user equipment 105. The message from user equipment 105 to the proxy 125 (step 315) should accordingly comprise information on both the communication application in the process of making an access to the application server 120 and a location indicator. Alternatively the proxy 125 may retrieve (step 320) static information relating to more than one communication application from the caching node 260. In the step of forming the request (step 330) the proxy 125 uses only the static information relating to the communication application.

Communication applications utilizing HTTP in the communication with an application service, for example WEB-browsing services, is believed to be common usage of present and future wireless communication systems. HTTP is a stateless protocol. This means that all requests are independent of each other, i.e. there is no session in HTTP. This is an advantage with regards to the flexibility and universality of the protocol, but a disadvantage with regards to the amount of overhead information that for example a HTTP-request comprises. A preferred embodiment of the invention facilitates an efficient usage of the scarce radio resources combined with the usage of HTTP.

A HTTP request conveys a plurality of HTTP headers. A plurality of these reflect the capability of the sender, examples thereof being the HTTP Accept header ,UserAgent and UAprof, which are exemplified in table 1. These static HTTP headers are examples of static information according to the above definition.

**table 1**

| | |
|---|---|
| Accept: | audio/amr, video/h.323, video/h.324, image/gif, image/jpg, image/jpg, application/x-java-vm/java-applet, text/vnd.wap.emn+xml, application/vnd.wap.emn+wbxml, application/vnd.oma.drm.message, application/vnd.oma.drm.rights+xml, application/vnd.oma.drm.rights+wbxml, application/vnd.oma.drm.content |
| UserAgent | SEM Browser 4.14 |
| UAProf | www.sem.com/phones/k700i/k700i_upprof.rdf |

The preferred embodiment utilizes the Session Initiation Protocol (SIP) and IMS developed in the framework of 3GPP rel-5. In SIP an establish initiation routine, SIP register, is performed for example at the power on of the user equipment. According to the preferred embodiment the SIP register is adapted to encompass also the caching of static information. This initial procedure, corresponding to the initial step 305, is schematically illustrated in Fig. 4, and comprises the steps of:
405: User Equipment 105 sends a SIP REGISTER message. This message comprises information about static HTTP headers that shall be cached.
410: P-CSCF 261 queries HSS 262 about the location of the S-CSCF 263 of the subscriber is located. The P-CSCF 261 adds the MSISDN, IMSI of the mobile terminal and/or the user equipment IP-address, via mapping of IP-address to MSISDN function, for example.
415: Response back from HSS 262 to P-CSCF 261.
420: The SIP REGISTER message is sent to the S-CSCF 263. The message now comprises static HTTP headers plus the MSISDN, IMSI or the IP-address of the subscriber.
425: The SIP registrar server (i.e. S-CSCF 263) caches the HTTP headers relating to the communication application of the user equipment 105. The S-CSCF 263 corresponds to the caching node 260.
430: Register OK is sent back to the P-CSCF 261.
435: Register OK is sent back to the user equipment 105.

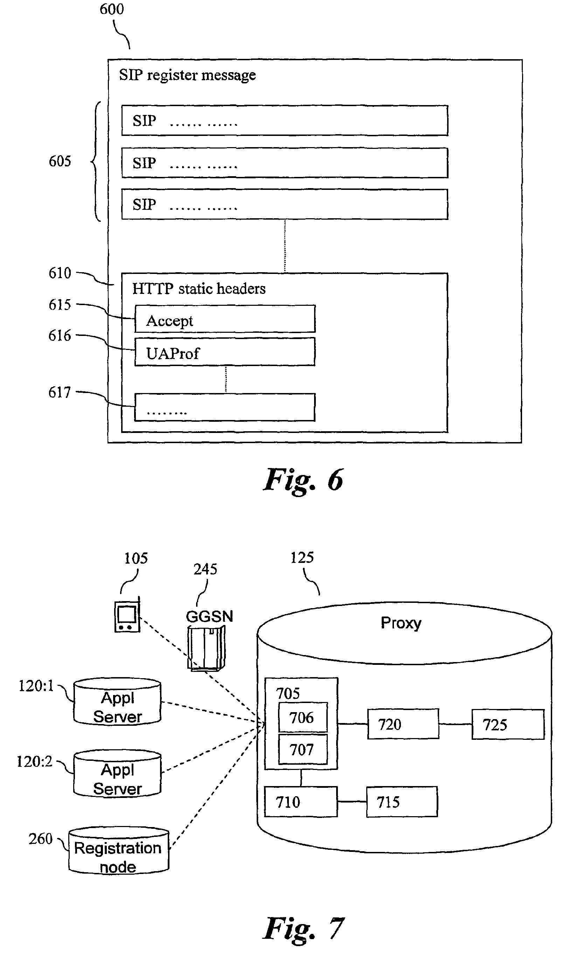

The adapted SIP register message is schematically illustrated in Fig. 6. Among the regular SIP content 605 is the HTTP static headers 610, comprising the content 615, 616, 617 of table 1, for example.

The retrieving of static information and forming of the request to the application server, corresponding to steps 315-330, according to the preferred embodiment, is illustrated in the signaling scheme of Fig. 5. The procedure comprises the steps, to be taken in the establishment or during a communication session, of:
505: Terminal sends a reduced HTTP Request message to the HTTP proxy 125 (HTTP proxy). This message contains information about that static HTTP headers shall be used. This could preferable be done by that the user equipment 105 HTTP browser (communication application) adds an HTTP header like "static_header: yes" in the reduced HTTP request message.
510: The HTTP Proxy 125 asks HSS 262 where the caching node (S-CSCF 263) of the MSISDN is located via mapping of IP-address to the MSISDN function.
515: Address to the S-CSCF 263 is sent back to the HTTP proxy 125.
520: The HTTP proxy 125 request the cached static HTTP headers from the S-CSCF 263.
525: The static HTTP headers are returned to the HTTP proxy 125.
530: The HTTP proxy 125 adds the static HTTP headers to the original reduced HTTP request, and thus forms a full HTTP request.
535: The HTTP proxy 125 sends the full HTTP request to the application server 120.

Thanks to the method of the preferred embodiment the full HTTP request does not need to be handled in the radio access network for each communication session.

As an alternative to the use of SIP register, SIP publish can be used in a similar way. The main purpose of SIP register is to register the user equipment 105 and make it accessible in the communication network. The information is not kept if the user equipment is turned off, or disables the communication abilities; a new SIP register is required each time the user equipment is powered on. With SIP publish the user equipment may publish information, for example static information, which is kept also if the user equipment is turned off.

A further embodiment is adapted to the uses of WEB services. A plurality of messages can be defined within the framework of WEB services, including but not limited to the use of HTTP. The initial steps may comprise the caching of XML-headers with static information. After a reduced WEB service message, corresponding to the reduced HTTP request, the WEB service proxy retrieves the cached XML-headers and forms a full WEB service message.

In yet a further embodiment of the present invention the proxy does not only form a full request, but also process the information before forming the full request. This is exemplified with an encryption application. In the start message 305 the user equipment includes data to be encrypted. After the reception of the message the proxy 125 retrieves static information needed for performing the encryption, for example an encryption key, and possibly other static information, from the caching node 260. Prior to forming the full request 325, the proxy performs the encryption.

The proxy 125 according to the present invention comprises a plurality of functional parts, preferably implemented as software code means, to be adapted to effectuate the method according to the invention. In Fig. 7 are the main functional parts, which are involved in the process of retrieving static information on initiating or during a communication session, schematically depicted. The terms "comprising" and "connected" should here be interpreted as links between functional parts and not necessarily physical connections.

The proxy comprises communication means 705 for communicating on an application level with a user equipment 105, the application server 120 and the caching node 260. The receiving means 706 of the communication means 705 is arranged to receive a start message or a reduced HTTP request from the user equipment. The accessing/retrieving means 707 handles the access to the caching node 260 and the retrieving of the static information. The proxy may also comprise interpreting means 710, connected to storing means 715 and the communication means 705, for interpreting the indication, flag or address in the start message (reduced HTTP request). In the request forming means 720, in connection with the communication means 705, the full requests are formed. The proxy 125 may further be provided with selecting means 725 adapted to select the static information relevant to a specific communication application of the user equipment.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A method for accessing a service application from a user equipment (105) in a wireless communication system (200), wherein during a packet data communication session a communication application executed in an user equipment (105) accesses a service application of an application server (120) via a proxy (125), **characterised in that** the method comprises the steps, to be taken under the establishment or during the communication session, of:
- the communication application of the user equipment (105) *sending* a start message (315) to the proxy (125) requesting to utilize a service application of an application server (120), said start message comprising a location indicator;
- the proxy (125) *accessing* (320) a caching node (260) by the use of the location indicator and from the caching node (260) *retrieving* static information, said static information having been transferred from the user equipment (105) and cached in the caching node (260) prior to the communication session; and
- the proxy (125) forming (325) a request at least partly based on the retrieved static information, and *sending* (326) said request to the service application of the application server (120),
whereby the service application will be provided with static information relating to the communication application without the static information has to be transferred from the user equipment (105) during each communication session.

2. The method according to claim 1, **wherein** the location indicator comprises an address to the caching node (260).

3. The method according to claim 2, **wherein** the address is an URL.

4. The method according to claim 1, **wherein** the location indicator is a flag that can be interpreted by the proxy (125) to indicated the caching node (260).

5. The method according to any of claims 1-4, **wherein** the proxy (125) in combination with said location indicator uses mobile identifying means such as IMSI, MSISDN or the user equipment IP-address, to retrieve the static information from the caching node (260).

6. The method according to any of claims 1-4, **wherein** the proxy (125) in combination with said location indicator uses a unique identity of the static information to retrieve the static information from the caching node (260), said unique identity transferred to the proxy (125) in the start message (315).

7. The method according to any of claims 1-6, **wherein** the proxy (210) in the step of forming a request (325) process first data received from the user equipment (105) in the start message (315), using second data comprised in the static information, and includes the processed first data in the request to the application server (120).

8. The method according to claim 7, **wherein** the second data is an encryption key, which the proxy uses in the process of encrypting the first data.

9. The method according to any of claims 1-8, **wherein** the start message is a reduced HTTP request, the static information comprises HTTP headers and the request formed by the proxy (125) in the forming step (325) is a full HTTP-request.

10. A method for utilizing a service application from a user equipment (105) in a wireless communication system (200), wherein during a packet data communication session a communication application executed in an user equipment (105) utilizes a service application by accessing an application server (120) via a proxy (125), **characterised in that** the method comprises initial steps to be taken prior to the establishing of the communication session, of:
- the user equipment (105) *transferring* (305, 307) static information relating to at least one communication application to a caching node (260), and
the steps to be taken under the establishment or during the communication session of:
- the communication application of the user equipment (105) *sending* a start message (315) to the proxy (125) requesting to utilize a service application of an application server (120), said start message comprising a location indicator;
- the proxy (125) accessing (320) the caching node (260) by the use of the location indicator and from the caching node (260) *retrieving* static information; and
- the proxy (125) *forming* (325) a request at least partly based on the retrieved static information, and *sending* (326) said request to the service application of the application server (120),
whereby the service application will be provided with static information relating to the communication application without the static information has to be transferred from the user equipment (105) during each communication session.

11. The method according to claim 10, **wherein** the location indicator comprises an address to the caching node (260).

12. The method according to claim 11, **wherein** the address is an URL.

13. The method according to claim 10, wherein the location indicator is a flag that can be interpreted by the proxy (125) to indicated the caching node (260).

14. The method according to any of claims 10-13, **wherein** the proxy (125) in combination with said location indicator uses mobile identifying means such as IMSI, MSISDN or the user equipment IP-address, to retrieve the static information from the caching node (260).

15. The method according to any of claims 10-13, **wherein** the proxy (125) in combination with said location indicator uses a unique identity of the static information to retrieve the static information from the caching node (260), said unique identity transferred to the proxy (125) in the start message (315).

16. The method according to any of claims 10-15, **wherein** the proxy (210) in the step of forming a request (325) process first data received from the user equipment (105) in the start message (315), using second data comprised in the static information, and includes the processed first data in the request to the application server (120).

17. The method according to claim 16, **wherein** the second data is an encryption key, which the proxy uses in the process of encrypting the first data.

18. The method according to any of claims 10-17, **wherein** the start message is a reduced HTTP request, the static information comprises HTTP headers and the request formed by the proxy (125) in the forming step (325) is a full HTTP-request.

19. The method according to claim 18, **wherein** the transferring of static information (305,307) is performed with a SIP-register process and the nodes of a IP multimedia core network subsystem (IMS, 265) is utilized for caching the static information.

20. The method according to claim 18, **wherein** the transferring of static information (305,307) is performed with a SIP-publish process and the nodes of a IP multimedia core network subsystem (IMS, 265) is utilized for caching the static information.

21. A method in a proxy (125) in a wireless communication system (200) for forming a request to a service application of an application server (120) during or on establishing a packet data communication session between a communication application executed in an user equipment (105) and a service application of an application server (120) via the proxy (125), **characterised in that** the method comprises the steps, to be taken under the establishment or during the communication session, of:
- the proxy (125) receiving a start message (315) from the communication application of the user equipment (105) requesting to utilize a service application of an application server (120), said start message comprising a location indicator;
- the proxy (125) *accessing* (320) a caching node (260) by the use of the location indicator and from the caching node (260) *retrieving* static information, said static information having been transferred from the user equipment (105) and cached in the caching node (260) prior to the communication session; and
- the proxy (125) *forming* (325) a request at least partly based on the retrieved static information, and *sending* (326) said request to the service application of the application server (120),
whereby the proxy (125) will provide the service application with static information relating to the communication application without the static information has to be transferred from the user equipment (105) during the communication session.

22. The method according to claim 21, **wherein** the location indicator comprises an address, such as an URL, to the caching node (260).

23. The method according to claim 21, **wherein** the location indicator is a flag that can be interpreted by the proxy (125) to indicated the caching node (260).

24. The method according to any of claims 21-23, **wherein** the proxy (125) in combination with said location indicator uses mobile identifying means such as IMSI, MSISDN or the user equipment IP-address, to retrieve the static information from the caching node (260).

25. The method according to any of claims 21-23, **wherein** the proxy (125) in combination with said location indicator uses a unique identity of the static information to retrieve the static information from the caching node (260), said unique identity transferred to the proxy (125) in the start message (315).

26. The method according to any of claims 21-25, **wherein** the proxy (210) in the step of forming a request (325) process first data received from the user equipment (105) in the start message (315), using second data comprised in the static information, and includes the processed first data in the request to the application server (120).

27. The method according to claim 27, **wherein** the second data is an encryption key, which the proxy uses in the process of encrypting the first data.

28. The method according to any of claims 21-27, **wherein** the start message is a reduced HTTP request, the static information comprises HTTP headers and the request formed by the proxy (125) in the forming step (325) is a full HTTP-request.

29. A wireless communication network node serving as a proxy (125), said proxy node (125) adapted for facilitating a packet data communication session between a communication application executed in an user equipment (105) and a service application of an application server (120) via the proxy (125), **characterised by**
- receiving means (706) adapted for receiving start messages (315) requesting to utilize a service application from the communication application of the user equipment (105);
- interpreting means (710) adapted for interpreting a location indicator in said start message, the interpreting means (710) connected to the receiving means (705);
- accessing and retrieving means (707) adapted to retrieve cached static information from a caching node (260) by the use of the location indicator, the accessing and retrieving means (707) connected to the interpreting means (710); and
- request forming means (720) adapted for forming a request at least partly based on the retrieved static information, the request forming means (720) connected to the accessing and retrieving means (707).

## Patentansprüche

1. Verfahren zum Zugreifen auf eine Dienstanwendung von einer Benutzerausrüstung (105) in einem drahtlosen Kommunikationssystem (200), wobei während einer Paketdatenkommunikationssitzung eine Kommunikationsanwendung, die in einer Benutzerausrüstung (105) ausgeführt wird, auf eine Dienstanwendung eines Anwendungsservers (120) über einen Proxy (Vertreter) (125) zugreift, **dadurch gekennzeichnet, dass** das Verfahren die Schritte umfasst, die unter Herstellung oder während der Kommunikationssitzung zu unternehmen sind, von:
- die Kommunikationsanwendung der Benutzerausrüstung (105) sendet eine Startnachricht (315) an den Proxy (125), die anfragt, eine Dienstanwendung eines Anwendungsservers (120) zu verwenden, wobei die Startnachricht einen Ortsindikator umfasst;
- der Proxy (125) greift (320) auf einen Cache-Knoten (260) durch die Verwendung des Ortsindikators zu und erhält von dem Cache-Knoten (260) statische Information, wobei die statische Information von der Benutzerausrüstung (105) übertragen worden ist und in dem Cache-Knoten (260) vor der Kommunikationssitzung zwischengespeichert worden ist; und
- der Proxy (125) bildet (325) eine Anfrage zumindest teilweise basierend auf der erhaltenen statischen Information und sendet (326) die Anfrage an die Dienstanwendung des Anwendungsservers (120), wobei die Dienstanwendung mit statischer Information versorgt wird, die die Kommunikationsanwendung betrifft, ohne dass die statische Information von der Benutzerausrüstung (105) während jeder Kommunikationssitzung übertragen werden muss.

2. Verfahren nach Anspruch 1, wobei der Ortsindikator eine Adresse zu dem Cache-Knoten (260) umfasst.

3. Verfahren nach Anspruch 2, wobei die Adresse eine URL ist.

4. Verfahren nach Anspruch 1, wobei der Ortsindikator ein Flag ist, das von dem Proxy (125) interpretiert werden kann, um den Cache-Knoten (260) anzuzeigen.

5. Verfahren nach einem der Ansprüche 1-4, wobei der Proxy (125) in Kombination mit dem Ortsindikator eine Mobiltelefon-identifizierende Vorrichtung, wie zum Beispiel IMSI, MSISDN oder die Benutzerausrüstungs-IP-Adresse verwendet, um die statische Information von dem Cache-Knoten (260) zu erhalten.

6. Verfahren nach einem der Ansprüche 1-4, wobei der Proxy (125) in Kombination mit dem Ortsindikator eine eindeutige Identität der statischen Information verwendet, um die statische Information von dem Cache-Knoten (260) zu erhalten, wobei die eindeutige Identität an den Proxy (125) in Startnachricht (315) übertragen wird.

7. Verfahren nach einem der Ansprüche 1-6, wobei der Proxy (210) in dem Schritt eines Bildens einer Anfrage (325) erste Daten verarbeitet, die von der Benutzerausrüstung (105) in der Startnachricht (315) empfangen werden, unter Verwendung zweiter Daten, die in der statischen Information umfasst sind und die verarbeiteten ersten Daten in die Anfrage an den Anwendungsservers (120) einschließt.

8. Verfahren nach Anspruch 7, wobei die zweiten Daten ein Verschlüsselungsschlüssel sind, den der Proxy bei dem Prozess eines Verschlüsselns der ersten Daten verwendet.

9. Verfahren nach einem Ansprüche 1-8, wobei die Startnachricht eine reduzierte HTTP-Anfrage ist, wobei die statische Information HTTP-Header umfasst und die Anfrage, die von dem Proxy (125) in dem bildenden Schritt (325) gebildet wird, eine volle HTTP-Anfrage ist.

10. Verfahren zum Verwenden einer Dienstanwendung von einer Benutzerausrüstung (105) in einem drahtlosen Kommunikationssystem (200), wobei während einer Paketdatenkommunikationssitzung eine Kommunikationsanwendung, die in einer Benutzerausrüstung (105) ausgeführt wird, eine Dienstanwendung durch Zugreifen auf einen Anwendungsserver (120) über einen Proxy (125) verwendet, **dadurch gekennzeichnet, dass** das Verfahren anfängliche Schritte umfasst, die vor dem Herstellen der Kommunikationssitzung zu unternehmen sind, von:
- die Benutzerausrüstung (105) überträgt (305, 307) statische Information, die zumindest eine Kommunikationsanwendung betrifft, an einen Cache-Knoten (260) und
die Schritte, die unter der Herstellung oder während der Kommunikationssitzung zu unternehmen sind, von:
- die Kommunikationsanwendung der Benutzerausrüstung (105) sendet eine Startnachricht (315) an den Proxy (125), die anfragt, eine Dienstanwendung eines Anwendungsservers (120) zu verwenden, wobei die Startnachricht einen Ortsindikator umfasst;
- der Proxy (125) greift (320) auf den Cache-Knoten (260) durch die Verwendung des Ortsindikators zu und erhält von dem Cache-Knoten (260) statische Information; und
- der Proxy (125) bildet (325) eine Anfrage zumindest teilweise basierend auf der erhaltenen statischen Information und sendet (326) die Anfrage an die Dienstanwendung des Anwendungsservers (120), wobei die Dienstanwendung mit statischer Information versorgt wird, die die Kommunikationsanwendung betrifft, ohne dass die statische Information von der Benutzerausrüstung (105) während jeder Kommunikationssitzung übertragen werden muss.

11. Verfahren nach Anspruch 10, wobei der Ortsindikator eine Adresse an den Cache-Knoten (260) umfasst.

12. Verfahren nach Anspruch 11, wobei die Adresse eine URL ist.

13. Verfahren nach Anspruch 10, wobei der Ortsindikator ein Flag ist, das von dem Proxy (125) interpretiert werden kann, um den Cache-Knoten (260) anzuzeigen.

14. Verfahren nach einem der Ansprüche 10-13, wobei der Proxy (125) in Kombination mit dem Ortsindikator eine Mobiltelefon-identifizierende Vorrichtung, wie zum Beispiel IMSI, MSISDN oder die Benutzerausrüstungs-IP-Adresse verwendet, um die statische Information von dem Cache-Knoten (260) zu erhalten.

15. Verfahren nach einem der Ansprüche 10-13, wobei der Proxy (125) in Kombination mit dem Ortsindikator eine eindeutige Identität der statischen Information verwendet, um die statische Information von dem Cache-Knoten (260) zu erhalten, wobei die eindeutige Identität an den Proxy (125) in der Startnachricht (315) übertragen wird.

16. Verfahren nach einem der Ansprüche 10-15, wobei der Proxy (210) in dem Schritt eines Bildens einer Anfrage (325) erste Daten verarbeitet, die von der Benutzerausrüstung (105) in der Startnachricht (315) empfangen werden, unter Verwendung zweiter Daten, die in der statischen Information umfasst sind und die verarbeiteten ersten Daten in die Anfrage an den Anwendungsservers (120) einschließt.

17. Verfahren nach Anspruch 16, wobei die zweiten Daten ein Verschlüsselungsschlüssel sind, den der Proxy in dem Prozess eines Verschlüsselns der ersten Daten verwendet.

18. Verfahren nach einem der Ansprüche 10-17, wobei die Startnachricht eine reduzierte HTTP-Anfrage ist, wobei die statische Information HTTP-Header umfasst und die Anfrage, die von dem Proxy (125) in dem bildenden Schritt (325) gebildet wird, eine volle HTTP-Anfrage ist.

19. Verfahren nach Anspruch 18, wobei das Übertragen von statischer Information (305, 307) mit einem SIP-Registrierungsprozess durchgeführt wird und die Knoten eines IP-Multimedia-Kernnetzwerk-Subsystems (IMS, 265) zum zwischenspeichern der statischen Information verwendet werden.

20. Verfahren nach Anspruch 18, wobei das Übertragen von statischer Information (305, 307) mit einem SIP-Veröffentlichungsprozess durchgeführt wird und die Knoten eines IP-Multimedia-Kernnetzwerk-Subsystems (IMS, 265) zum zwischenspeichern der statischen Information verwendet werden.

21. Verfahren in einem Proxy (125) in einem drahtlosen Kommunikationssystem (200) zum Bilden einer Anfrage an eine Dienstanwendung eines Anwendungsservers (120), während oder beim Herstellen einer Paketdatenkommunikationssitzung zwischen einer Kommunikationsanwendung, die in einer Benutzerausrüstung (105) ausgeführt wird und einer Dienstanwendung eines Anwendungsservers (120) über den Proxy (125), **dadurch gekennzeichnet, dass** das Verfahren die Schritte umfasst, die unter der Herstellung oder während der Kommunikationssitzung zu unternehmen sind, von:
- der Proxy (125) empfängt eine Startnachricht (315) von der Kommunikationsanwendung der Benutzerausrüstung (105), die anfragt, eine Dienstanwendung eines Anwendungsservers (120) zu verwenden, wobei die Startnachricht einen Ortsindikator umfasst;
- der Proxy (125) greift (320) auf einen Cache-Knoten (260) durch die Verwendung des Ortsindikators zu und erhält von dem Cache-Knoten (260) statische Information, wobei die statische Information von der Benutzerausrüstung (105) übertragen worden ist und in dem Cache-Knoten (260) vor der Kommunikationssitzung zwischengespeichert worden ist; und
- der Proxy (125) bildet (325) eine Anfrage zumindest teilweise basierend auf der erhaltenen statischen Information und sendet (326) die Anfrage an die Dienstanwendung des Anwendungsservers (120), wobei der Proxy (125) die Dienstanwendung mit statischer Information versorgt, die die Kommunikationsanwendung betrifft, ohne dass die statische Information von der Benutzerausrüstung (105) während der Kommunikationssitzung übertragen werden muss.

22. Verfahren nach Anspruch 21, wobei der Ortsindikator eine Adresse, wie zum Beispiel eine URL zu dem Cache-Knoten (260) umfasst.

23. Verfahren nach Anspruch 21, wobei der Ortsindikator ein Flag ist, das von dem Proxy (125) interpretiert werden kann, um den Cache-Knoten (260) anzuzeigen.

24. Verfahren nach einem der Ansprüche 21-23, wobei der Proxy (125) in Kombination mit dem Ortsindikator eine Mobiltelefon-identifizierende Vorrichtung, wie zum Beispiel IMSI, MSISDN oder die Benutzerausrüstungs-IP-Adresse verwendet, um die statische Information von dem Cache-Knoten (260) zu erhalten.

25. Verfahren nach einem der Ansprüche 21-23, wobei der Proxy (125) in Kombination mit dem Ortsindikator eine eindeutige Identität der statischen Information verwendet, um die statische Information von dem Cache-Knoten (260) abzurufen, wobei die eindeutige Identität an den Proxy (125) in der Startnachricht (315) übertragen wird.

26. Verfahren nach einem der Ansprüche 21-25, wobei der Proxy (210) in dem Schritt eines Bildens einer Anfrage (325) erste Daten verarbeitet, die von der Benutzerausrüstung (105) in der Startnachricht (315) empfangen werden, unter Verwendung zweiter Daten, die in der statischen Information umfasst sind und die verarbeiteten ersten Daten in die Anfrage an den Anwendungsservers (120) einschließt.

27. Verfahren nach Anspruch 17, wobei die zweiten Daten ein Verschlüsselungsschlüssel sind, den der Proxy in dem Prozess eines Verschlüsselns der ersten Daten verwendet.

28. Verfahren nach einem der Ansprüche 21-27, wobei die Startnachricht eine reduzierte HTTP-Anfrage ist, wobei die statische Information HTTP-Header umfasst und die Anfrage, die von dem Proxy (125) in dem bildenden Schritt (325) gebildet wird, eine volle HTTP-Anfrage ist.

29. Knoten eines drahtlosen Netzwerkes, der als ein Proxy (125) dient, wobei der Proxy-Knoten (125) angepasst zum Ermöglichen einer Paketdatenkommunikationssitzung zwischen einer Kommunikationsanwendung, die in einer Benutzerausrüstung (105) ausgeführt wird und einer Dienstanwendung eines Anwendungsservers (120) über den Proxy (125) ist, **gekennzeichnet durch**
- eine empfangende Vorrichtung (706), die angepasst zum Empfangen von Startnachrichten (315) ist, die anfragen, eine Dienstanwendung von der Kommunikationsanwendung der Benutzerausrüstung (105) zu verwenden;
- eine interpretierende Vorrichtung (710), die angepasst zum Interpretieren eines Ortsindikators in der Startnachricht ist, wobei die interpretierende Vorrichtung (710) mit der empfangenden Vorrichtung (705) verbunden ist;
- eine zugreifende und erhaltende Vorrichtung (707), die angepasst ist, zwischengespeicherte statische Information von einem Cache-Knoten (260) **durch** die Verwendung des Ortsindikators zu erhalten, wobei die zugreifende und erhaltende Vorrichtung (707) mit der interpretierenden Vorrichtung (710) verknüpft ist; und
- einer Anfrage-bildenden Vorrichtung (720), die angepasst zum Bilden einer Anfrage zumindest teilweise basierend auf der erhaltenen statischen Information ist, wobei die Anfrage-bildende Vorrichtung (720) mit der zugreifenden und erhaltenden Vorrichtung (707) verbunden ist.

## Revendications

1. Procédé d'accès à une application de service à partir d'un équipement (105) d'utilisateur dans un système (200) de communication sans fil, dans lequel pendant une session de communication de données en paquets une application de communication exécutée dans un équipement (105) d'utilisateur accède à une application de service d'un serveur (120) d'applications via un mandataire (125), **caractérisé en ce que** le procédé comprend les étapes, à effectuer à l'établissement ou pendant la session de communication :
- d'envoi, par l'application de communication de l'équipement (105) d'utilisateur, d'un message (315) de début au mandataire (125) demandant à utiliser une application de service d'un serveur (120) d'applications, ledit message de début comprenant un indicateur de localisation ;
- d'accès (320), par le mandataire (125), à un noeud (260) de mise en antémémoire par l'utilisation de l'indicateur de localisation, et de récupération, à partir du noeud (260) d'antémémoire, d'une information statique, ladite information statique ayant été transférée depuis l'équipement (105) d'utilisateur et mise en antémémoire dans le noeud (260) de mise en antémémoire avant la session de communication ; et
- de formation (325), par le mandataire (125), d'une demande au moins partiellement basée sur l'information statique récupérée, et d'envoi (326) de ladite demande à l'application de service du serveur (120) d'applications,
ce par quoi l'application de service sera pourvue de l'information statique se rapportant à l'application de communication sans que l'information statique doive être transférée depuis l'équipement (105) d'utilisateur pendant chaque session de communication.

2. Procédé selon la revendication 1, dans lequel l'indicateur de localisation comprend une adresse du noeud (260) de mise en antémémoire.

3. Procédé selon la revendication 2, dans lequel l'adresse est un localisateur universel de ressources (URL pour "Universal Resource Locator").

4. Procédé selon la revendication 1, dans lequel l'indicateur de localisation est un indicateur qui peut être interprété par le mandataire (125) pour indiquer le noeud (260) de mise en antémémoire.

5. Procédé selon l'une quelconque des revendications 1 à 4, dans lequel le mandataire (125), en combinaison avec ledit indicateur de localisation, utilise un moyen d'identification de mobile comme une identité internationale d'abonné mobile (IMSI pour "International Mobile Subscriber Identity"), un numéro d'abonné mobile au réseau numérique à intégration de services (MSISDN pour "Mobile Subscriber Integrated Service Digital network Number") ou l'adresse IP de l'équipement d'utilisateur, pour récupérer l'information statique à partir du noeud (260) de mise en antémémoire.

6. Procédé selon l'une quelconque des revendications 1 à 4, dans lequel le mandataire (125), en combinaison avec ledit indicateur de localisation, utilise une identité unique de l'information statique pour récupérer l'information statique à partir du noeud (260) de mise en antémémoire, ladite identité unique étant transférée au mandataire (125) dans le message (315) de début.

7. Procédé selon l'une quelconque des revendications 1 à 6, dans lequel le mandataire (210), à l'étape de formation d'une demande (325), traite des premières données reçues de l'équipement (105) d'utilisateur dans le message (315) de début, en utilisant des secondes données comprises dans l'information statique, et met les premières données traitées dans la demande adressée au serveur (120) d'applications.

8. Procédé selon la revendication 7, dans lequel les secondes données sont une clé de cryptage, que le mandataire utilise dans le traitement de cryptage des premières données.

9. Procédé selon l'une quelconque des revendications 1 à 8, dans lequel le message de début est une demande réduite sous HTTP, dans lequel l'information statique comprend des en-têtes sous HTTP, et dans lequel la demande formée par le mandataire (125) à l'étape de formation (325) est une demande complète sous HTTP.

10. Procédé d'utilisation d'une application de service à partir d'un équipement (105) d'utilisateur dans un système (200) de communication sans fil, dans lequel, pendant une session de communication de données en paquets, une application de communication exécutée dans un équipement (105) d'utilisateur utilise une application de service en accédant à un serveur (120) d'applications via un mandataire (125),
**caractérisé en ce que** le procédé comprend des étapes initiales à effectuer avant l'établissement de la session de communication :
- de transfert (305, 307), par l'équipement (105) d'utilisateur à un noeud (260) de mise en antémémoire, d'une information statique se rapportant à au moins une application de communication ; et
les étapes, à effectuer à l'établissement ou pendant la session de communication :
- d'envoi, par l'application de communication de l'équipement (105) d'utilisateur, d'un message (315) de début au mandataire (125) demandant à utiliser une application de service d'un serveur (120) d'applications, ledit message de début comprenant un indicateur de localisation ;
- d'accès (320), par le mandataire (125), au noeud (260) de mise en antémémoire par l'utilisation de l'indicateur de localisation, et de récupération, à partir du noeud (260) d'antémémoire, d'une information statique ; et
- de formation (325), par le mandataire (125), d'une demande au moins partiellement basée sur l'information statique récupérée, et d'envoi (326) de ladite demande à l'application de service du serveur (120) d'applications,
ce par quoi l'application de service sera pourvue de l'information statique se rapportant à l'application de communication sans que l'information statique doive être transférée depuis l'équipement (105) d'utilisateur pendant chaque session de communication.

11. Procédé selon la revendication 10, dans lequel l'indicateur de localisation comprend une adresse du noeud (260) de mise en antémémoire.

12. Procédé selon la revendication 11, dans lequel l'adresse est un URL.

13. Procédé selon la revendication 10, dans lequel l'indicateur de localisation est un indicateur qui peut être interprété par le mandataire (125) pour indiquer le noeud (260) de mise en antémémoire.

14. Procédé selon l'une quelconque des revendications 10 à 13, dans lequel le mandataire (125), en combinaison avec ledit indicateur de localisation, utilise un moyen d'identification de mobile comme une IMSI, un MSISDN ou l'adresse IP de l'équipement d'utilisateur, pour récupérer l'information statique à partir du noeud (260) de mise en antémémoire.

15. Procédé selon l'une quelconque des revendications 10 à 13, dans lequel le mandataire (125), en combinaison avec ledit indicateur de localisation, utilise une identité unique de l'information statique pour récupérer l'information statique à partir du noeud (260) de mise en antémémoire, ladite identité unique étant transférée au mandataire (125) dans le message (315) de début.

16. Procédé selon l'une quelconque des revendications 10 à 15, dans lequel le mandataire (210), à l'étape de formation d'une demande (325), traite des premières données reçues de l'équipement (105) d'utilisateur dans le message (315) de début, en utilisant des secondes données comprises dans l'information statique, et met les premières données traitées dans la demande adressée au serveur (120) d'applications.

17. Procédé selon la revendication 16, dans lequel les secondes données sont une clé de cryptage, que le mandataire utilise dans le traitement de cryptage des premières données.

18. Procédé selon l'une quelconque des revendications 10 à 17, dans lequel le message de début est une demande réduite sous HTTP, dans lequel l'information statique comprend des en-têtes sous HTTP, et dans lequel la demande formée par le mandataire (125) à l'étape de formation (325) est une demande complète sous HTTP.

19. Procédé selon la revendication 18, dans lequel le transfert de l'information statique (305, 307) se fait à l'aide d'un traitement de registre de protocole d'établissement de session (SIP pour "Session Initiation Protocol"), et dans lequel les noeuds d'un sous-système de coeur de réseau multimédia sous IP (IMS pour "IP Multimedia core network Subsystem", 265) sont utilisés pour la mise en antémémoire de l'information statique.

20. Procédé selon la revendication 18, dans lequel le transfert de l'information statique (305, 307) se fait à l'aide d'un traitement de publication de SIP, et dans lequel les noeuds d'un sous-système de coeur de réseau multimédia sous IP (IMS, 265) sont utilisés pour la mise en antémémoire de l'information statique.

21. Procédé, dans un mandataire (125) dans un système (200) de communication sans fil, de formation d'une demande à une application de service d'un serveur (120) d'applications pendant ou au cours de l'établissement d'une session de communication de données en paquets entre une application de communication exécutée dans un équipement (105) d'utilisateur et une application de service d'un serveur (120) d'applications via le mandataire (125), **caractérisé en ce que** le procédé comprend les étapes, à effectuer à l'établissement ou pendant la session de communication :
- de réception, par le mandataire (125), d'un message (315) de début provenant de l'application de communication de l'équipement (105) d'utilisateur demandant à utiliser une application de service d'un serveur (120) d'applications, ledit message de début comprenant un indicateur de localisation ;
- d'accès (320), par le mandataire (125), à un noeud (260) de mise en antémémoire par l'utilisation de l'indicateur de localisation, et de récupération, à partir du noeud (260) d'antémémoire, d'une information statique, ladite information statique ayant été transférée depuis l'équipement (105) d'utilisateur et mise en antémémoire dans le noeud (260) de mise en antémémoire avant la session de communication ; et
- de formation (325), par le mandataire (125), d'une demande au moins partiellement basée sur l'information statique récupérée, et d'envoi (326) de ladite demande à l'application de service du serveur (120) d'applications,
ce par quoi le mandataire (125) fournira à l'application de service l'information statique se rapportant à l'application de communication sans que l'information statique doive être transférée depuis l'équipement (105) d'utilisateur pendant la session de communication.

22. Procédé selon la revendication 21, dans lequel l'indicateur de localisation comprend une adresse, comme un URL, du noeud (260) de mise en antémémoire.

23. Procédé selon la revendication 21, dans lequel l'indicateur de localisation est un indicateur qui peut être interprété par le mandataire (125) pour indiquer le noeud (260) de mise en antémémoire.

24. Procédé selon l'une quelconque des revendications 21 à 23, dans lequel le mandataire (125), en combinaison avec ledit indicateur de localisation, utilise un moyen d'identification de mobile comme une IMSI, un MSISDN ou l'adresse IP de l'équipement d'utilisateur, pour récupérer l'information statique à partir du noeud (260) de mise en antémémoire.

25. Procédé selon l'une quelconque des revendications 21 à 23, dans lequel le mandataire (125), en combinaison avec ledit indicateur de localisation, utilise une identité unique de l'information statique pour récupérer l'information statique à partir du noeud (260) de mise en antémémoire, ladite identité unique étant transférée au mandataire (125) dans le message (315) de début.

26. Procédé selon l'une quelconque des revendications 21 à 25, dans lequel le mandataire (210), à l'étape de formation d'une demande (325), traite des premières données reçues de l'équipement (105) d'utilisateur dans le message (315) de début, en utilisant des secondes données comprises dans l'information statique, et met les premières données traitées dans la demande adressée au serveur (120) d'applications.

27. Procédé selon la revendication 27, dans lequel les secondes données sont une clé de cryptage, que le mandataire utilise dans le traitement de cryptage des premières données.

28. Procédé selon l'une quelconque des revendications 21 à 27, dans lequel le message de début est une demande réduite sous HTTP, dans lequel l'information statique comprend des en-têtes sous HTTP, et dans lequel la demande formée par le mandataire (125) à l'étape de formation (325) est une demande complète sous HTTP.

29. Noeud de réseau de communication sans fil servant de mandataire (125), ledit noeud (125) de mandataire étant conçu pour faciliter une session de communication de données en paquets entre une application de communication exécutée dans un équipement (105) d'utilisateur et une application de service d'un serveur (120) d'applications via le mandataire (125), **caractérisé :**
- **par** un moyen (706) de réception conçu pour recevoir des messages (315) de début demandant à utiliser une application de service provenant de l'application de communication de l'équipement (105) d'utilisateur ;
- par un moyen (710) d'interprétation conçu pour interpréter un indicateur de localisation dans ledit message de début, le moyen (710) d'interprétation étant connecté au moyen (705) de réception ;
- par un moyen (707) d'accès et de récupération conçu pour récupérer de l'information statique mise en antémémoire à partir d'un noeud (260) de mise en antémémoire par l'utilisation de l'indicateur de localisation, le moyen (707) d'accès et de récupération étant connecté au moyen (710) d'interprétation ; et
- par un moyen (720) de formation de demande conçu pour former une demande au moins partiellement basée sur l'information statique récupérée, le moyen (720) de formation de demande étant connecté au moyen (707) d'accès et de récupération.
